(19) Europäisches Patentamt
European Patent Office
Office européen des brevets

(11) Veröffentlichungsnummer: **0 174 412**
**B1**

(12) # EUROPÄISCHE PATENTSCHRIFT

(45) Veröffentlichungstag der Patentschrift: **26.10.88**

(51) Int. Cl.4: **C 08 K 5/20**, C 08 K 5/25, C 07 C 102/00, C 08 L 101/04

(21) Anmeldenummer: **84810445.1**

(22) Anmeldetag: **12.09.84**

(54) **Stabilisierung von chlorhaltigen Thermoplasten mit stickstoffhaltigen organischen Verbindungen.**

(43) Veröffentlichungstag der Anmeldung: **19.03.86 Patentblatt 86/12**

(45) Bekanntmachung des Hinweises auf die Patenterteilung: **26.10.88 Patentblatt 88/43**

(84) Benannte Vertragsstaaten: **BE DE FR GB IT**

(56) Entgegenhaltungen:
**DE - B - 1 091 120**
**DE - C - 871 834**
**GB - A - 1 022 958**
**JP - A - 59 184 261**

**Die Akte enthält technische Angaben, die nach dem Eingang der Anmeldung eingereicht wurden und die nicht in dieser Patentschrift enthalten sind.**

(73) Patentinhaber: **CIBA-GEIGY AG, Klybeckstrasse 141, CH-4002 Basel (CH)**

(72) Erfinder: **Wehner, Wolfgang, Dr., Wetzbach 34, D-6144 Zwingenberg (DE)**
Erfinder: **Müller, Horst, Dr., Reichenberger Strasse 12, D-6149 Fürth/Odenwald (DE)**
Erfinder: **Schneider, Rainer, Dr., Am Markstein 4, D-6144 Zwingenberg (DE)**

**EP 0 174 412 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung betrifft chlorhaltige Thermoplaste enthaltend organische stickstoffhaltige Verbindungen, sowie ein Verfahren zur Herstellung (substituierter) Anthranilsäure-(2-hydroxyethyl)-amide.

Chlorhaltige Thermoplaste müssen gegen den schädigenden Einfluss von Licht und Wärme geschützt werden. Insbesondere die Verarbeitung des Kunststoffes zu Formteilen ist mit einer Wärmebelastung verbunden, die eine Dunkelfärbung und Versprödung bewirkt, wenn nicht geeignete Zusätze beigefügt werden. Als Zusatzstoffe hierfür wurden bisher insbesondere Organozinnverbindungen, Metallcarboxylate und -Phenolate, Phosphite und Gemische davon verwendet. Die mit diesen Zusatzstoffen erzielte Stabilisierung ist in der Praxis nicht immer ausreichend, so dass durchaus ein Bedürfnis nach verbesserten, insbesondere metallfreien Thermostabilisatoren besteht.

Verschiedene stickstoffhaltige organische Verbindungen wurden zur Stabilisierung von chlorhaltigen Polymerisaten bereits vorgeschlagen. Beispiele hierfür sind Phenylharnstoffderivate, wie sie z.B. in «Stabilisierung und Alterung von Plastwerkstoffen» von Kurt Thinius, S. 358-359, (1969) beschrieben sind, sowie verschiedene Aminophenole, wie in der EP-Patentanmeldung 0 048 222 beschrieben.

Ferner werden in dem DD-Patent 652 Aminobenzolsulfonsäureamide bzw. Aminobenzoesäureester als PVC-Stabilisatoren beschrieben.

Aus der DE-PS 871 834 sind aromatische Amine als PVC-Stabilisatoren bekannt, die unter anderem Carbonsäureamidreste als Substituenten tragen.

Es wurde nun gefunden, dass sich bestimmte stickstoffhaltige organische Verbindungen für die Stabilisierung von chlorhaltigen Thermoplasten besonders gut eignen und gegen deren Schädigung durch die thermische Belastung bei ihrer Verarbeitung sehr wirksam sind.

Die Erfindung betrifft chlorhaltige Thermoplaste, enthaltend mindestens eine stickstoffhaltige organische Verbindung der Formel I

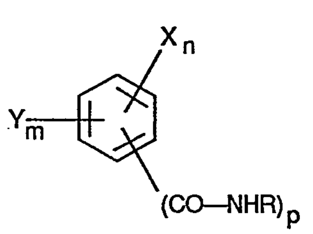

(I),

in welcher
m eine Zahl 0, 1 oder 2,
n eine Zahl 1, 2 oder 3 und
p eine Zahl 1 oder 2 sind,
Y für -F, -Cl, -Br, -I, $-CH_3$ oder $-C_2H_5$ steht,
X $-NH_2$, $-NHCH_3$, $-NHNH_2$, $-OCH_3$, $-OC_2H_5$ bedeutet, wobei X bei mehrfachem Auftreten innerhalb der gegebenen Definition unterschiedlich sein kann, und
R -H, -OH, $-NH_2$, oder durch eine bis drei HO- und/oder $C_1$-$C_4$ Alkoxygruppen substituiertes $C_1$-$C_{18}$-Alkyl ist, oder R ferner eine Gruppe der Formel II

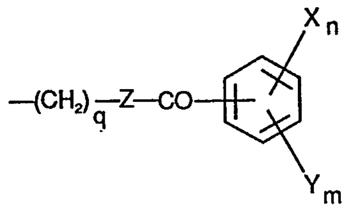

(II)

darstellt, worin Z -NH- oder -O- ist, q eine ganze Zahl von 0 bis 6 bedeutet, wobei Y, X, m und n die oben angegebene Bedeutung haben und wobei R nur dann Wasserstoff ist, wenn p 1 ist.

Stellt R durch -OH und/oder Alkoxy substituiertes Alkyl dar, so handelt es sich dabei beispielsweise um 2-Hydroxyethyl, 2-Hydroxy-n-propyl, 3-Hydroxy-n-propyl, 2,3-Dihydroxy-n-propyl, 2-Methoxyethyl, 2-Ethoxyethyl, 2-n-Butyloxyethyl, 2-Isopropyloxyethyl, 3-Methoxypropyl, 2-Hydroxy-3-n-butyloxypropyl, oder 2-Hydroxy-1,1-di-(hydroxymethyl)-ethyl.

Bevorzugt werden 2-Hydroxyethyl und 2-Hydroxypropyl, insbesondere jedoch 2-Hydroxyethyl.

Y bedeutet vorzugsweise Brom, Iod, Fluor und insbesondere Chlor, und die Zahl m bevorzugt 0 oder 1, besonders bevorzugt jedoch 0. Die Zahl n ist insbesondere 1.

Bevorzugt enthalten die erfindungsgemässen Thermoplaste solche Derivate der Formel I, worin n und p 1 und m die Zahl 0 darstellen.

Ebenfalls bevorzugt sind Thermoplaste, enthaltend Verbindungen der Formel I, in welcher X $-NH_2$, R -OH, $-NH_2$, durch -OH und/oder $C_1$-$C_4$ Alkoxy substituiertes $C_2$-$C_3$ Alkyl, m die Zahl 0 und n und p die Zahl 1 bedeuten.

Ganz besonders bevorzugt enthalten die erfindungsgemässen Thermoplaste Verbindungen der Formel I, worin X $-NH_2$, R -OH, $-NH_2$ oder $-C_2H_4OH$, m die Zahl 0 und n und p die Zahl 1 bedeuten.

Besonders bevorzugt werden Verbindungen der Formel I, worin X $-NH_2$ oder $-NHCH_3$ oder $-NH-NH_2$ oder $-OCH_3$ oder $-OC_2H_5$ bedeutet, insbesondere jedoch $-NH_2$.

Ebenfalls bevorzugt werden Verbindungen der Formel I, worin R -OH oder $-NH_2$ oder durch eine bis drei HO- und/oder $C_1$-$C_4$ Alkoxy substituiertes $C_1$-$C_{18}$ Alkyl bedeuten.

Ebenfalls von Interesse sind Verbindungen der Formel I, worin R ein Rest der Formel II darstellt.

Zu den bevorzugten Verbindungen der Formel I zählen auch solche, bei denen R -OH oder $-NH_2$ oder $-C_2H_4OH$ ist.

Ebenfalls interessant sind Verbindungen der Formel I, worin Z -O- ist.

Auch bevorzugt werden Verbindungen der Formel I, worin R durch ein oder zwei OH-Gruppen

substituiertes $C_2$–$C_4$ Alkyl sind, wobei pro C-Atom nur eine OH-Gruppe anwesend ist und wobei das an den Amidstickstoff gebundene C-Atom keine OH-Gruppe trägt.

Als Beispiele von Verbindungen der Formel I seien genannt:

Anthranilsäure-hydroxylamid
5-Chloranthranilsäure-hydroxylamid
Anthranilsäure-N-(1′,1′-di-hydroxymethyl-2′-hydroxyethyl)-amid
Anthranilsäure-N-(2′,3′-dihydroxy-propyl)-amid
Anthranilsäure-N-(2′-hydroxyethyl)-amid
5-Chloranthranilsäure-N-(2′-hydroxyethyl)-amid
Anthranilsäure-N-(2′-hydroxy-n-propyl)-amid
Anthranilsäure-N-(3′-hydroxy-n-propyl)-amid
Anthranilsäure-N-(2′-hydroxy-2′-phenyl-ethyl)-amid
Anthranilsäure-N-(2′-hydroxy-3′-n-butyloxy-n-propyl)-amid
2-N-Methylamino-benzoesäure-N-(2′-hydroxyethyl)-amid
2-Aminobenzoesäurehydrazid
3-Aminobenzoesäurehydrazid
4-Aminobenzoesäurehydrazid
2-, 3- oder 4-Methoxybenzoesäurehydriazid
2-Amino-5-chlorbenzoesäurehydrazid
2-Amino-3,5-dichlorbenzoesäurehydrazid
2-Methoxy-4-aminobenzoesäurehydrazid
Anthranilsäure-N-[2′-(p-aminobenzoyloxy)-ethyl]-amid
3-Amino-4-chlorbenzoesäure-N-(2′-hydroxyethyl)-amid
3-Amino-4-chlorbenzoesäurehydrazid
4-Amino-2-chlorbenzoesäure-N-(2′-hydroxyethyl)-amid
4-Amino-2-chlorbenzoesäurehydrazid
3-Aminobenzoesäure-N-(2′-hydroxyethyl)-amid
4-Aminobenzoesäure-N-(2′-hydroxyethyl)-amid
4-Chloranthranilsäure-N-(2′-hydroxyethyl)-amid
3,5-Dichloranthranilsäure-N-(2-hydroxyethyl)-amid
4-Chloranthranilsäurehydrazid
4-Amino-3-methoxybenzoesäure-N-(2′-hydroxyethyl)-amid
4-Amino-3-methoxybenzoesäurehydrazid
3,4-Diaminobenzoesäure-N-(2′hydroxyethyl)-amid
3,4-Diaminobenzoesäurehydrazid
3,5-Diaminobenzoesäure-N-(2′-hydroxyethyl)-amid
3,5-Diaminobenzoesäurehydrazid
2,3-, 2,4-, 2,6-, 3,4- oder 3,5-Dimethoxybenzoesäure-N-(2′-hydroxyethyl)-amid
2,3-, 2,4-, 2,6-, 3,4- oder 3,5-Dimethoxybenzoesäurehydrazid
2,3,4-, 2,4,5-, 3,4,5- oder 2,4,6-Trimethoxybenzoesäure-N-(2′hydroxyethyl)-amid
2,3,4-, 2,4,5-, 3,4,5- oder 2,4,6-Trimethoxybenzoesäurehydrazid.

Viele der Verbindungen der Formel I sind bekannt und können nach an sich bekannten Verfahren hergestellt werden.

Verbindungen der Formel I können beispielsweise durch Umsetzung eines Isatoesäureanhydridderivates mit einem Amin der Formel III

$H_2NR$ (III)

bzw. mit Hydrazin hergestellt werden, wie beispielsweise nach dem in Synthesis 1980, S. 516–523, bzw. dem in US-PS 3 351 659 beschriebenen Verfahren. Sie können auch durch Reaktion eines Benzolcarbonsäureesters mit einem Amin der Formel III oder mit Hydrazin erhalten werden.

Derartige Verbindungen können auch durch Reaktion eines Nitrobenzolcarbonsäurechlorids mit einem Amin der Formel III und anschliessende Reduktion der Nitrogruppe zum Amin hergestellt werden.

In der Formel III hat der Rest R die oben angegebene Bedeutung.

Die Erfindung betrifft weiterhin ein Verfahren zur Herstellung von Verbindungen der Formel IV

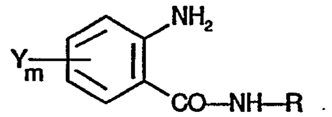

(IV)

worin R, Y und m die schon oben definierte Bedeutung besitzen, R bevorzugt aber $-CH_2-CH_2-OH$ ist, durch Umsetzung eines geeignet substituierten Isatoesäureanhydrids mit einem primären Amin $RNH_2$, dadurch gekennzeichnet, dass man als Reaktionsmedium Butylacetat oder eine Butylacetat/Wasser-Mischung oder das Reaktionsprodukt verwendet.

Die Verbindungen der Formel I können chlorhaltigen Thermoplasten in den üblichen Mengen zugegeben werden. Vorzugsweise werden 0,01 bis 10 Gew.%, besonders 0,05 bis 5 und insbesondere 0,2 bis 2,5 Gew.%, bezogen auf den chlorhaltigen Thermoplasten, einverleibt. Gemische der Verbindungen der Formel I können auch eingesetzt werden.

Als chlorhaltige Thermoplaste werden bevorzugt Vinylchloridpolymere oder -copolymere verwendet.

Bevorzugt sind dabei Suspensions- und Massepolymere und ausgewaschene, also emulgatorarme Emulsionspolymere. Als Comonomere für die Copolymerisate kommen z.B. in Frage: Vinylacetat, Vinylidenchlorid, Transdichlorethylen, Ethylen, Propylen, Butylen, Maleinsäure, Acrylsäure, Fumarsäure, Itaconsäure. Weitere geeignete chlorhaltige Thermoplaste sind nachchloriertes PVC und chlorierte Polyolefine, ferner Pfropfenpolymerisate von PVC mit EVA (Ethylen-Vinylacetat) und MBS (Methylacrylat-Butadien-Styrol).

Die Herstellung der erfindungsgemässen stabilisierten Thermoplaste erfolgt nach bekannten Verfahren. Die Stabilisatoren der Formel I werden den zu stabilisierenden chlorhaltigen Thermoplasten vor der Verarbeitung in üblichen Einrichtungen einverleibt. Eine homogene Mischung kann z.B. mit Hilfe eines Zweiwalzenmischers bei 150 bis 210° erzielt werden.

Die erfindungsgemässen Verbindungen der Formel I können vorteilhafterweise auch in Kombination in üblichen Mengen mindestens mit

einem der herkömmlichen PVC-Stabilisatoren und/oder weiteren Zusätzen, eingesetzt werden, wie Epoxyverbindungen, vorzugsweise epoxidierte Fettsäureester, wie epoxidiertes Sojabohnenöl, Phosphite, Metallcarboxylate und Metallphenolate von Metallen der zweiten Haupt- und Nebengruppe des Periodensystems, oder auch anorganische Salze von Metallen der zweiten Nebengruppe des Periodensystems, wie z.B. $ZnCl_2$ oder ferner auch Organozinnverbindungen, insbesondere Mono- oder Diorganozinnverbindungen, Antimontrimercaptocarbonsäureester, sowie Antioxidantien.

Costabilisatoren werden bevorzugt in Mengen von 0,05 bis 3, besonde 0,1 bis 3 Gew.%, bezogen auf die gesamte Zusammensetzung, eingearbeitet.

Geeignete herkömmliche Phosphite sind Phosphite der allgemeinen Formeln V und VI

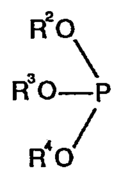 (V), 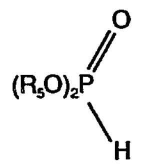 (VI),

in denen $R^2$, $R^3$ und $R^4$ gleich oder verschieden sind und $C_6$–$C_{18}$ Alkyl, einen durch $C_1$–$C_9$ Alkyl oder $C_1$–$C_9$ Alkoxy substituierten oder unsubstituierten Phenylrest, oder $C_5$–$C_7$ Cycloalkyl bedeuten, und worin $R_5$ $C_6$–$C_{18}$ Alkyl ist.

Bedeuten $R^2$, $R^3$, $R^4$ und $R^5$ $C_6$–$C_{18}$ Alkyl, so handelt es sich dabei z.B. um n-Hexyl, n-Octyl, n-Nonyl, Decyl, Dodecyl, Tetradecyl, Hexadecyl oder Octadecyl. Bevorzugt sind Alkylgruppen mit 8 bis 12 C-Atomen.

Als substituiertes Phenyl bedeuten $R^2$, $R^3$ und $R^4$ beispielsweise Tolyl, Ethylphenyl, Xylyl, Nonyl, Cymyl, Kresyl, 4-Methoxyphenyl, 2,4-Dimethoxyphenyl, Ethoxyphenyl, Butoxyphenyl, p-n-Octylphenyl oder p-n-Nonylphenyl.

Ganz besonders geeignete Phosphite sind Trioctyl-, Tridecyl-, Tridodecyl-, Tritetradecyl-, Tristearyl-, Trioleyl-, Triphenyl-, Trikresyl-, Tris-p-nonylphenyl- oder Tricyclohexylphosphit, und besonders bevorzugt sind die Aryl-Dialkyl- sowie die Alkyl-Diaryl-Phosphite wie z.B. Phenyldidecyl-, Nonylphenyl-didecyl-, (2,4-Ditert.-butylphenyl)-di-dodecylphosphit, (2,6-Di-tert.-butylphenyl)-di-dodecylphosphit.

Beispiele von Metallcarboxylaten sind die Metallsalze von gesättigten, ungesättigten oder mit Hydroxylgruppen substituierten aliphatischen Carbonsäuren mit 6 bis 20 C-Atomen, wie Hexansäure, Heptansäure, Octansäure, 2-Ethylhexansäure, Undecylsäure, Laurinsäure, Myristinsäure, Palmitinsäure, Stearinsäure, 12-Oxystearinsäure, Ölsäure, Linolsäure oder Ricinolsäure. Ebenfalls von Interesse sind die Metallsalze von aromatischen Carbonsäuren wie beispielsweise durch $C_1$–$C_8$ Alkyl substituierte Benzoate. Bevorzugt sind Metalle aus der Reihe Ba, Sr, Ca, Mg und Zn. Bevorzugte Metallcarboxylate sind beispielsweise Ca-, Ba- oder Zn-Stearat oder -Oleat.

Als Metallphenolate kommen insbesondere die Metallsalze von Phenolen mit 6–20 C-Atomen in Frage, beispielsweise Alkylphenolen wie p-tert. Butyl-, p-Octyl-, p-Nonyl- oder p-Dodecylphenol.

Beispiele von Organozinnverbindungen sind (polymere) Organozinn-Oxyde oder -Sulfide wie Butylstannon- und -thiostannonsäure, Organozinncarboxylate wie Dibutylzinn-Dilaurat, Organozinn-Alkoholate und -Phenolate, Organozinn-Merkaptide wie Dibutylzinn-didodecylmercaptid, oder Organozinn-Merkaptocarbonsäureester wie Di-n-octylzinn-di-(2-ethylhexyl-thioglykolat) oder Di-n-butylzinn-di-(mercaptopropionsäure-n-dodecylester). Besonders geeignet darunter sind Mono- und Diorganozinn-thioglykolester sowie Gemische davon.

Beispiele von Antioxidantien sind alkylierte Monophenole und Hydrochinone, hydroxylierte Thiodiphenylether, 1,4-Alkyliden-Bisphenole, Benzylverbindungen, Acylaminophenole, Ester oder Amide der β-(3,5-Di-tert.-butyl-4-hydroxyphenyl)-propionsäure und Ester der β-(5-tert.-Butyl-4-hydroxy-3-methylphenyl)-propionsäure.

Bevorzugte Antioxidantien sind alkylierte Monophenole, Alkyliden-Bisphenole und phenylsubstituierte Propionsäureester, insbesondere aber 2,6-Di-tert.-butyl-p-kresol, 2,2-Bis-(4′-hydroxyphenyl)-propan und β-(3,5-Di-tert.-butyl-4-hydroxyphenyl)-propionsäure-n-octadecylester.

Die Verbindungen der Formel I können auch mit weiteren stickstoffhaltigen organischen Stabilisatoren eingesetzt werden. Beispiele hierfür sind Cyanamid, Dicyandiamid, Guanamine wie Benzoguanamin, Indole wie Phenylindol, Pyrrole (beispielsweise gemäss der EP-Anmeldung Nr. 22087), Pyrazole (beispielsweise wie in GB-PS 866 936 beschrieben), Harnstoffe und Thioharnstoffe wie Monophenylharnstoff und Diphenylthioharnstoff, Aminocrotonsäureester, β-Diketone wie Stearoylbenzoylmethan, Polyole wie Pentaerythrit. Bevorzugt dabei sind die Harnstoffverbindungen, insbesondere aber Dicyandiamid. Ganz besonders bevorzugt wird Dicyandiamid mit einer Korngrösse von weniger als 10 µm.

Je nach dem Verwendungszweck der erfindungsgemäss stabilisierten Thermoplaste könnne vor oder bei der Einarbeitung des Stabilisators auch noch weitere Zusätze eingearbeitet werden, wie z.B. Gleitmittel (bevorzugt Montanwachse oder Glycerinester), Fettsäureester, Paraffine, Weichmacher, Füllstoffe, Russ, Asbest, Kaolin, Talk, Glasfasern, Modifikatoren (wie etwa Schlagzäh-Zusätze), optische Aufheller, Pigmente, Lichtschutzmittel, UV-Absorber, Flammschutzmittel oder Antistatika.

Die erfindungsgemässen Thermoplaste können nach den dafür gebräuchlichen Formgebungsverfahren z.B. durch Extrusion, Spritzgiessen oder Kalandrieren zu Formteilen verarbeitet werden. Auch die Verwendung als Plastisole ist möglich.

Die Thermostabilisierung mit den erfindungsgemässen in Betracht gezogenen Stabilisatoren ist in den erfindungsgemäss berücksichtigten Thermosplasten sehr gut.

Die nachfolgenden Beispiele dienen der näheren Erläuterung der Erfindung. Dabei sind, wenn nicht anders definiert, Teile Gewichtsteile und Prozente Gewichtsprozente.

Beispiel 1

48 Teile NaOH werden in 300 Teilen Wasser vorgelegt. Unter Kühlen werden portionsweise 41,6 Teile $NH_2OH \cdot HCl$ und anschliessend 45,2 Teile Methylanthranilat zugegeben. Nach 3tägigem Stehenlassen bei Raumtemperatur wird die Lösung eingeengt und der so erhaltene Rückstand mit konzentrierter Salzsäure bis auf pH 6 versetzt. Nach Filtration und Waschen mit Ethanol wird Anthranilsäurehydroxylamid als farblose Kristalle vom Smp. 140–142°C mit einer Ausbeute von 85% erhalten.

Beispiel 2

165,2 Teile p-Aminobenzoesäureethylester werden in 150 Teilen Ehtanolamin aufgelöst, und anschliessend wird Ethanol bei 160°C abdestilliert. Die flüchtigen Bestandteile werden danach im Vakuum abgezogen und der resultierende Rückstand aus Isopropanol umkristallisiert. Man erhält p-Aminobenzoesäure-β-hydroxyethylamid vom Smp. 116°C.

Beispiel 3

a) 1039 Teile Isatoesäureanhydrid (96%ig) werden in eine Lösung von 410,5 Teilen Ethanolamin und 2000 Teilen $H_2O$ bei Raumtemperatur portionsweise eingetragen und nach beendeter $CO_2$-Entwicklung noch ½ Std. bei 60°C gerührt. Die erhaltene braune Lösung wird auf Rückstand eingeengt, dieser in $CHCl_3$ aufgenommen, anhaftendes Wasser azeotrop entfernt und erneut auf Rückstand eingeengt, wobei Anthranilsäure-β-hydroxyethylamid vom Smp. 90–92°C erhalten wird.

$^1$H-NMR(in DMSO; ppm gegen TMS):
6.5, 6.7, 7.1, 7.5 (4H);
3.3 und 3.5 (4H, 2 $CH_2$); 4.7 (1H, -OH); 6.4 (2H, $-NH_2$) und 8.1 (1H, -NH-).

b) 85,6 Teile Isatoesäureanhydrid werden in 300 Teilen Butylacetat und 12 Teilen Wasser suspendiert. Unter Rühren tropft man bei 40 bis 50°C 30,6 Teile Ethanolamin zu ($CO_2$ Entwicklung) und lässt 30 Minuten bei 100°C nachreagieren. Nach Abtrennung der organischen Phase und Entfernung der flüchtigen Bestandteile erhält man 69,7 Teile des Endproduktes. Durch weiteres Verdünnen der wässrigen Phase mit 10 Teilen Wasser und Kühlen auf 0°C erhält man nach Filtration und Trocknung weitere 9,0 Teile, so dass die Gesamtausbeute an Endprodukt 88% d.Th. beträgt.

c) 85,6 Teile Isatoesäureanhydrid werden bei 40°C in 250 ml Butylacetat suspendiert. Unter Rühren tropft man eine Mischung aus 30,5 Teilen Ethanolamin und 50 Teilen Butylacetat zu. Zur Nachreaktion wird eine Stunde auf Rückfluss gehalten. Nach Zugabe von 10 Teilen Filterhilfe wird abgesaugt und mit 40 Teilen heissem Butylacetat nachgewaschen. Es wird auf 0°C gekühlt und das Reaktionsprodukt durch Filtration abgetrennt und getrocknet. Die Filtrate werden in weiteren vier Zyklen eingesetzt, wobei wie oben angegeben verfahren wird. Die Endausbeute beträgt 82% [d.Th.]

d) In eine Schmelze von 56,0 Teilen Anthranilsäure-N-(2′-hydroxy-ethyl)-amid und 12,2 Teilen Ethanolamin werden portionsweise bei 110°C 32,6 Teile Isatoesäureanhydrid eingetragen. Es wird eine Stunde bei 115°C gehalten. Nach Zugabe von 250 Teilen Butylacetat und 10 Teilen Filtrierhilfe wird eine Stunde bei 100°C gerührt. Nach Filtration und Entfernen der flüchtigen Bestandteile verbleibt das Reaktionsprodukt in einer Ausbeute von 96% d.Th.

e) Analog zum im obenerwähnten Beispiel 3a) angegebenen Verfahren werden weitere Verbindungen der Formel I hergestellt, welche in folgender Tabelle I aufgeführt sind.

Tabelle I

| Beispiel Nr. | Struktur der Verbindungen der Formel I | Schmelzpunkt (°C) | $^1$H-NMR (in DMSO aufgenommen), in ppm gegen TMS |
|---|---|---|---|
| 4 | 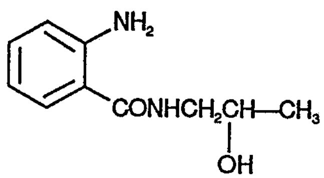 | 105–107 | 1.1 (3H, -$CH_3$);<br>3.2 (2H, >$CH_2$); 3.8 (1H, >CH)<br>4.7 (1H, -$OH^2$);<br>6.5, 6.7, 7.1, 7.5 (4H);<br>6.3 (2H, -$NH_2$) und<br>8.1 (1H, -$NH^2$–) |
| 5 | 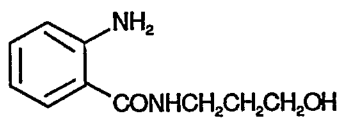 | 58–60 | 2.7, 3.3, 3.5 (6H, 3>$CH_2$);<br>4.5 (1H, -OH); 6.4 (2H, -$NH_2$);<br>6.5, 6.7, 7.1, 7.5 (4H);<br>8.2 (1H, -NH-) |
| 6 | 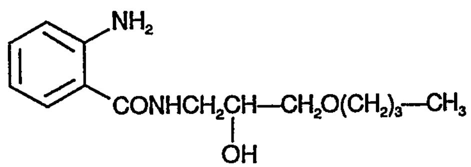 | 70–71 | 0.8 (3H, -$CH_3$);<br>1.5, 2.3, 3.2, 3.4 (10 H, 5>$CH_2$);<br>3.8 (1H, >CH–); 4.9 (1H, -OH);<br>6.4 (2H, -$NH_2$); 8.1 (1H, >NH);<br>6.5, 6.7, 7.1, 7.5 (4H) |
| 7 | 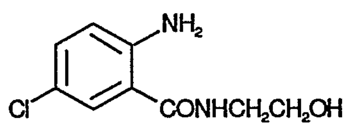 | 120–122 | 3.3, 3.5 (4H, 2>$CH_2$);<br>4.7 (1H, >OH);<br>6.5 (2H, -$NH_2$);<br>6.7, 7.2, 7.6 (3H);<br>8.3 (1H, >NH) |

Anwendungsbeispiele:

Beispiel 8

Eine Trockenmischung bestehend aus der in der nachfolgenden Rezeptur angegebenen Zusammensetzung wird auf einem Mischwalzwerk 5 Minuten bei 180°C gewalzt. Vom gebildeten Walzfell werden Testfolienstücke von 0,3 mm Dicke entnommen. Die Folienproben werden in einem Ofen bei 180°C thermisch belastet und im zeitlichen Abstand von 10 Minuten an einer Probe der Yellowness Index (YI) nach ASTM D 1925-70 bestimmt. Die Ergebnisse sind in der nachstehenden Tabelle II zusammengefasst.

Rezeptur:

| | |
|---|---|
| Solvic® 264 GA (K-Wert 64) (ein vorstabilisiertes E-PVC) | 100,00 g |
| Ca-Stearat | 0,35 g |
| Zn-Stearat | 0,15 g |
| Rheoplast® 39 (epoxidiertes Sojaöl) | 3,0 g |
| Irgastab® CH 300 (Didecylphenylphosphit) | 0,55 g |
| Verbindung der Formel I | 2,5 mMol |

Tabelle II:

| Stabilisator der Formel I gemäss Beispiel Nr.: | Yellowness Index (YI nach ASTM D 1925–70) nach zeitlichen Abständen von (Minuten) 0 | 10 | 20 | 30 Minuten |
|---|---|---|---|---|
| 1 | 4,8 | 4,5 | 8,2 | 18,8 |
| 3 | 4,7 | 6,4 | 10,4 | 24,6 |
| 4 | 2,4 | 3,3 | 6,6 | 11,0 |
| 5 | 2,5 | 4,4 | 8,0 | 15,2 |
| 6 | 6,5 | 10,2 | 12,8 | 21,1 |
| 7 | 2,9 | 3,8 | 4,8 | 6,0 |
| ohne | 16,6 | 32,6 | 34,7 | 31,8 |

Aus diesen Prüfungsergebnissen ergibt sich eindeutig die Verbesserung der Grundrezeptur (ohne Stabilisator) durch Zusatz der erfindungsgemäss in Betracht gezogenen Stabilisatoren der Formel I, insbesondere im Hinblick auf die Anfangsfarbe.

Beispiel 9

100 Teile E-PVC (Vestolit®E 6507), 2,0 Teile Loxiol®GS 1 und 3 Teile Titandioxid RN 57® (Titangesellschaft) werden mit 0,3 Teilen Anthranilsäureethanolamid (Beispiel Nr. 3a) vermischt und einem statischen Hitzetest gemäss Anwendungsbeispiel 8 unterworfen und in Abständen von 5 Minuten an einer Probe der Vergilbungsgrad mittels des Yellowness-Index (YI) nach ASTM D 1925-70 bestimmt. Die Ergebnisse sind in Tabelle III aufgeführt.

Tabelle III

| Belastungszeit (in Minuten) und Vergilbung (YI nach ASTM D 1925-70) | | | | | | | | | |
|---|---|---|---|---|---|---|---|---|---|
| 0′ | 5′ | 10′ | 15′ | 20′ | 25′ | 30′ | 35′ | 40′ | 45′ |
| 8,5 | 12,2 | 15,7 | 23,9 | 30,7 | 37,6 | 44,4 | 59,1 | 64,4 | 69,6 |

Beispiel 10

100 Teile Vestolit®E 6507 werden mit 40 Teilen Di-2-ethylhexylphthalat weichgemacht, mit 3 Teilen Titandioxid pigmentiert und mit 0,4 Teilen der im Beispiel 9 eingesetzten Verbindung der Formel I stabilisiert. Die folgende Tabelle IV enthält das Ergebnis eines statischen gemäss Beispiel 9 durchgeführten Hitzetests bei 180°C.

Tabelle IV

| Belastungszeit (in Minuten) und Vergilbung (YI nach ASTMD 1925–70) | | | | | | | | | |
|---|---|---|---|---|---|---|---|---|---|
| 0′ | 5′ | 10′ | 15′ | 20′ | 25′ | 30′ | 40′ | 45′ | 50′ |
| 5,1 | 6,6 | 8,7 | 11,4 | 15,7 | 20,5 | 25,4 | 31,3 | 37,8 | 42,2 |

Beispiel 11

100 Teile Vestolit®E 6507, 3,5 Teile Loxiol®GS 1 und eine erfindungsgemässe Kombination aus 0,5 Teilen eines Organozinnstabilisators (Dibutylzinn-bis-isooctylthioglykolat), 0,5 Teilen Anthranilsäureethanolamid (Beispiel 3a), 2,0 Teilen expoxidiertem Sojaöl und 0,5 Teilen Monophenyldidecylphosphit werden einem Dauerwalztest auf einem Laborwalzwerk bei 190°C unterzogen, wobei Folienstücke (0,3 mm Dicke) in Abständen

von 5 Minuten entnommen werden und der Vergilbungsgrad dieser Proben mittels des Yellowness-Index (YI) nach ASTM D 1925-70 bestimmt wird. Die Ergebnisse sind in Tabelle V aufgeführt.

Tabelle V

| Belastungszeit (in Minuten) und Vergilbung (YI nach ASTM D 1925-70) | | | | |
|---|---|---|---|---|
| 5′ | 10′ | 15′ | 20′ | 25′ |
| 8,3 | 26,5 | 57,4 | 85,2 | 104 |

Beispiel 12

Weitere erfindungsgemäss in Betracht gezogene Verbindungen der Formel I werden in folgenden Rezepturen gemäss dem in Beispiel 8 angegebenen Verfahren bei 190°C (Ofentemperatur) geprüft. Die Ergebnisse sind in der nächsten Tabelle VI aufgeführt.

Rezepturen:

A Vestolit®E 6507 (100 Teile); Loxiol®GS 1 (2 Teile); $TiO_2$ (4 Teile); Stabilisator der Formel I (0,8 Teile).

$A_1$ Vestolit®6507 (100 Teile); Loxiol®GS 1 (2 Teile); $TiO_2$ (4 Teile); Stabilisator der Formel I (0,6 Teile).

B Vestolit®E 8019 (100 Teile); Wachs®E (Hoechst, 0,4 Teile); Stabilisator der Formel I (0,6 Teile).

C Hostalit®E 2078 (100 Teile), Hostalit® ist ein mit $Na_2CO_3$ vorstabilisiertes E-PVC; Wachs®OP (0,4 Teile); Rheoplast®39 (2 Teile); Stabilisator der Formel I (0,8 Teile).

Tabelle VI

| Nr. | Stabilisator der Formel I | Rezeptur | YI (nach ASTM D 1925-70) und Belastungszeiten in Minuten 0′ | 5′ | 10′ | 15′ | 20′ | 25′ |
|---|---|---|---|---|---|---|---|---|
| 13 | 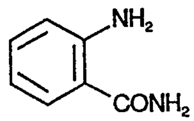 | $A_1$ | 18 | 36 | 59 | 73 | | |
| | | B | 30 | 49 | 66 | 91 | | |
| 14 | 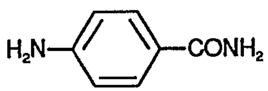 | $A_1$ | 12 | 25 | 39 | 46 | 54 | |
| | | B | 23 | 31 | 39 | 58 | 93 | |
| | | C | 17 | 26 | 33 | 44 | 66 | 83 |
| 15 | 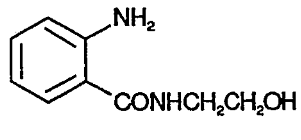 | A | 10 | 15 | 22 | 28 | 41 | 55 |
| | | $A_1$ | 12 | 22 | 34 | 38 | 50 | |
| | | B | 17 | 25 | 34 | 51 | 73 | |
| | | C | 13 | 21 | 28 | 37 | 52 | 79 |
| 16 | 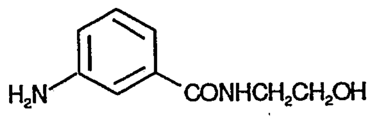 | A | 15 | 20 | 28 | 39 | 42 | |
| | | C | 25 | 33 | 44 | 58 | 101 | 143 |
| 17 | 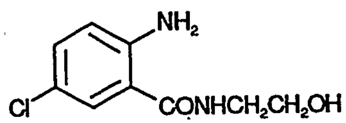 | $A_1$ | 13 | 25 | 38 | 45 | 50 | |
| 18 | 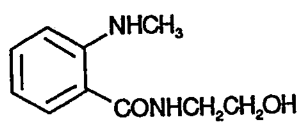 | $A_1$ | 22 | 33 | | | | |
| | | B | 45 | 57 | 72 | 93 | | |
| 19 | 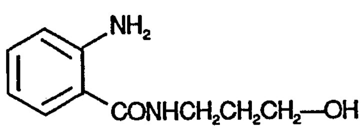 | $A_1$ | 14 | 26 | 40 | 45 | 55 | |
| | | $B_1$ | 24 | 34 | 46 | 63 | 85 | |

Tabelle VI (Fortsetzung)

| Nr. | Stabilisator der Formel I | Rezeptur | YI (nach ASTM D 1925-70) und Belastungszeiten in Minuten 0′ | 5′ | 10′ | 15′ | 20′ | 25′ |
|---|---|---|---|---|---|---|---|---|
| 20 | 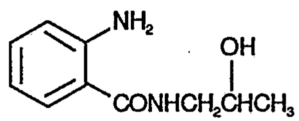 | $A_1$ | 15 | 44 | 46 | 49 | 60 | |
| | | B | 27 | 33 | 48 | 68 | 91 | |
| 21 | 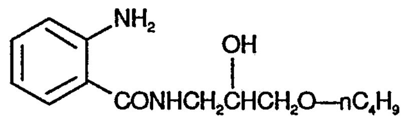 | $A_1$ | 18 | 32 | 46 | 54 | 62 | |
| | | B | 44 | 51 | 67 | 87 | 116 | |
| 22 | 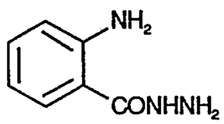 | A | 8 | 12 | 18 | 30 | 38 | 49 |
| | | C | 13 | 20 | 27 | 32 | 51 | 63 |
| 23 | 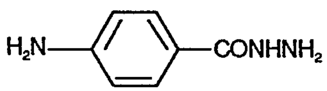 | A | 12 | 14 | 20 | 28 | 34 | |
| | | C | 17 | 26 | 33 | 44 | 66 | 83 |
| 24 | 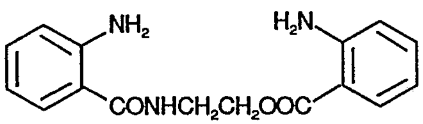 | A | 17 | 21 | 30 | 44 | 47 | 58 |
| | | C | 18 | 31 | 43 | 55 | 68 | 108 |
| 25 | 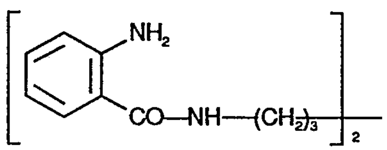 | $A_1$ | 24 | 35 | 49 | 59 | 62 | |
| | | B | 41 | 50 | 71 | 103 | | |

Beispiel 26

Weitere erfindungsgemäss in Betracht gezogene Verbindungen der Formel I werden in der folgenden Rezeptur (Walzzeit 10 Min. bei 180°C) gemäss Beispiel 8 bei 200°C (Ofentemperatur) geprüft.

Rezeptur:

Vestolit® E 8019 (100 Teile); Wachs®E (Firma Hoechst, 4 Teile); Stabilisator der Formel I (0,6 Teile).

Die Ergebnisse sind in der nächsten Tabelle VII aufgeführt.

Tabelle VII

| Nr. | Stabilisator der Formel I | Yellowness-Index nach ASTM D 1925-70 und Belastungszeiten in Minuten 0′ | 5′ | 15′ |
|---|---|---|---|---|
| 27 | 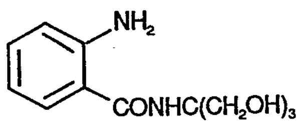 | 26,8 | 76,7 | 140,6 |
| 28 | 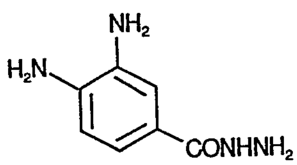 | 56,8 | 74,5 | 98,1 |
| 29 | 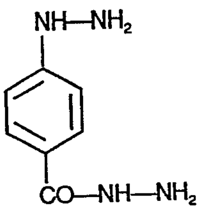 | 62,5 | 87,5 | 138,8 |
| 30 | 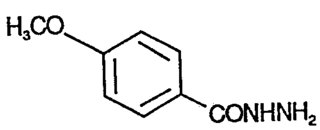 | 46,1 | 78,1 | 100,5 |
| 31 | 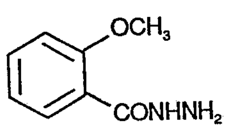 | 44,4 | 97,3 | 127,4 |
| 32 | 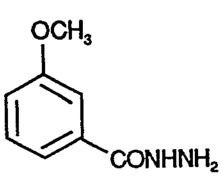 | 41,5 | 67,9 | 90,4 |
| 33 | 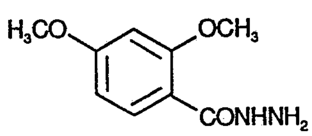 | 42,8 | 87,3 | 114,6 |

Tabelle VII (Fortsetzung)

| Nr. | Stabilisator der Formel I | Yellowness-Index nach ASTM D 1925-70 und Belastungszeiten in Minuten 0′ | 5′ | 15′ |
|---|---|---|---|---|
| 34 | 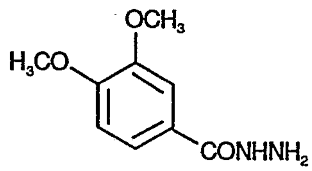 | 42,4 | 66,5 | 80,1 |
| 35 | 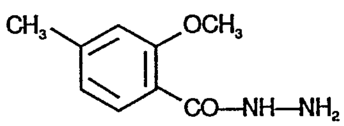 | 40,7 | 100,2 | 133,6 |
| 36 | 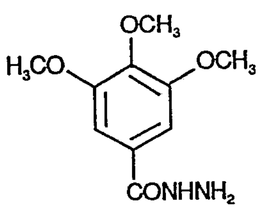 | 47,6 | 67,1 | 83,9 |

Beispiel 37

100 Teile alkalisch vorstabilisiertes E-PVC (Vestolit®E 6507), 40 Teile Diisooctylphthalat (DOP), 3 Teile Titandioxid (Kronos®RN 57 p) und 0,4 Teile einer Stabilisatormischung bestehend aus 70 Gew.-Teilen Dicyandiamid und 30 Gew.-Teilen Anthranilsäureethanolamid (Beispiel Nr. 3a) werden vermischt und bei 180°C einem statischen Hitzetest gemäss Anwendungsbeispiel 8 unterworfen. In Abständen von 5 Minuten wird der Vergilbungsgrad einer Probe durch Messung des Yellowness Index (YI) nach ASTM D 1925-70 bestimmt. Die Ergebnisse sind in Tabelle VIII dargestellt.

Tabelle VIII

| Belastungszeit (in Minuten) und Vergilbung (YI nach ASTM D 1925-70) | | | | | | | | | | |
|---|---|---|---|---|---|---|---|---|---|---|
| 0′ | 5′ | 10′ | 15′ | 20′ | 25′ | 30′ | 35′ | 40′ | 45′ | 50′ |
| 13,1 | 15,1 | 17,9 | 23,2 | 28,2 | 33,1 | 40,0 | 44,3 | 49,4 | 56 | 62 |

Beispiel 38

100 Teile PVC (Hostalit®E 2078), 4 Teile Wachs E und 0,6 Teile einer Stabilisatormischung bestehend aus 70 Gew.-Teilen Anthranilsäureethanolamid (Beispiel Nr. 3a) und 30 Gew.-Teilen Dicyandiamid werden vermischt und bei 200°C einem statischen Hitzetest gemäss Beispiel 8 unterworfen. In Abständen von 5 Minuten wird der Vergilbungsgrad der Probe durch Messung des Yellowness Index (YI) nach ASTM D 1925-70 bestimmt. Die Ergebnisse sind in Tabelle IX dargestellt.

Tabelle IX

| Belastungszeit (in Minuten) und Vergilbung (YI nach ASTM D 1925-70) | | | |
|---|---|---|---|
| 0′ | 5′ | 10′ | 15′ |
| 19,1 | 45,4 | 93,4 | 138 |

## Patentansprüche

1. Chlorhaltige Thermoplaste enthaltend mindestens eine stickstoffhaltige organische Verbindung der Formel I

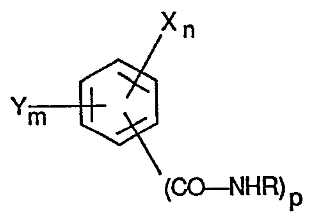

(I),

in welcher
m eine Zahl 0, 1 oder 2,
n eine Zahl 1, 2 oder 3 und
p eine Zahl 1 oder 2 sind,
Y für -F, -Cl, -Br, -I, $-CH_3$ oder $-C_2H_5$ steht,
X $-NH_2$, $-NHCH_3$, $-NHNH_2$, $-OCH_3$, $-OC_2H_5$ bedeutet,
wobei X bei mehrfachem Auftreten innerhalb der gegebenen Definition unterschiedlich sein kann, und
R -H, -OH, $-NH_2$, oder durch eine bis drei HO- und/oder $C_1$-$C_4$ Alkoxygruppen substituiertes $C_1$-$C_{18}$-Alkyl ist, oder R ferner eine Gruppe der Formel II

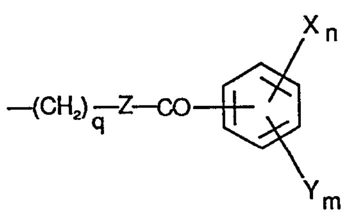

(II)

darstellt, worin Z -NH- oder -O- ist, q eine ganze Zahl von 0 bis 6 bedeutet, wobei Y, X, m und n die oben angegebene Bedeutung haben, und wobei R nur dann Wasserstoff ist, wenn p 1 ist.

2. Chlorhaltige Thermoplaste nach Anspruch 1, wobei in der Verbindung der Formel I n und p die Zahl 1 und m die Zahl 0 darstellen.

3. Chlorhaltige Thermoplaste nach Anspruch 1, enthaltend mindestens eine Verbindung der Formel I, worin X $-NH_2$, R -OH, $-NH_2$, durch -OH und/oder $C_1$-$C_4$ Alkoxy substituiertes $C_2$-$C_3$ Alkyl, m die Zahl 0 und n und p die Zahl 1 bedeuten.

4. Chlorhaltige Thermoplaste nach Anspruch 1, enthaltend mindestens eine Verbindung der Formel I, worin X $-NH_2$, R -OH, $-NH_2$ oder $-C_2H_4OH$, m die Zahl 0 und n und p die Zahl 1 bedeuten.

5. Chlorhaltige Thermoplaste nach Anspruch 1, enthaltend die Verbindung Anthranilsäureethanolamid.

6. Chlorhaltige Thermoplaste nach Anspruch 1, enthaltend mindestens eine Verbindung der Formel I in einer Menge von 0,01 bis 10 Gew.% bezogen auf den chlorhaltigen Thermoplasten.

7. Chlorhaltige Thermoplaste nach Anspruch 1, dadurch gekennzeichnet, dass sie Emulsions-PVC sind.

8. Chlorhaltige Thermoplaste nach Anspruch 1, enthaltend eine Harnstoff-Verbindung.

9. Chlorhaltige Thermoplaste nach Anspruch 1, enthaltend Dicyanidamid.

10. Chlorhaltige Thermoplaste nach Anspruch 9, wobei das Dicyandiamid eine Korngrösse von weniger als 10 µm besitzt.

11. Chlorhaltige Thermoplaste nach Anspruch 9, enthaltend eine Stabilisatormischung aus 30 Gew.-Teilen Anthranilsäureethanolamid und aus 70 Gew.-Teilen Dicyandiamid.

12. Chlorhaltige Thermoplaste nach Anspruch 9, enthaltend eine Stabilisatormischung aus 70 Gew.-Teilen Anthranilsäureethanolamid und aus 30 Gew.-Teilen Dicyandiamid.

13. Verfahren zur Herstellung von Verbindungen der Formel IV

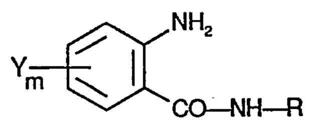

(IV)

worin R, Y und m die schon in Anspruch 1 definierte Bedeutung besitzen, durch Umsetzung eines geeignet substituierten Isatoesäureanhydrids mit einem primären Amin $R-NH_2$, dadurch gekennzeichnet, dass man als Reaktionsmedium Butylacetat oder eine Butylacetat/Wasser-Mischung oder das Reaktionsprodukt verwendet.

14. Verfahren gemäss Anspruch 13, worin R $-CH_2-CH_2-OH$ bedeutet.

## Claims

1. A chlorine-containing thermoplastic containing at least one nitrogen-containing organic compound of the formula I

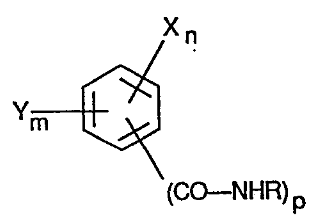

(I)

in which m is the number 0, 1 or 2, n is the number 1, 2 or 3, p is the number 1 or 2, Y is -F, -Cl, -Br, -I, $-CH_3$ or $-C_2H_5$, X is $-NH_2$, $-NHCH_3$, $-NHNH_2$, $-OCH_3$, $-OC_2H_5$, and if several symbols X occur, these may differ within the given definition and R is -H, -OH, $-NH_2$ or $C_1$-$C_{18}$ alkyl, which is substituted by one to three HO and/or $C_1$-$C_4$alkoxy groups, or R furthermore is a group of the formula II

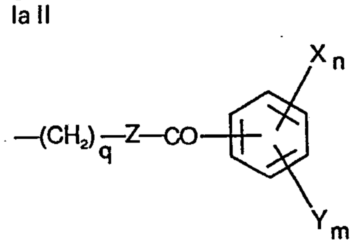

(II)

in which Z is -NH- or -O-, q is an integer from 0 to 6 and Y, X, m and n are as defined above, R being hydrogen only if p is 1.

2. A chlorine-containing thermoplastic according to claim 1, in which, in the compound of the formula I, n and p are the number 1 and m is the number 0.

3. A chlorine-containing thermoplastic according to claim 1, which contains at least one compound of the formula I in which X is $-NH_2$, R is -OH, $-NH_2$ or $C_2$-$C_3$alkyl which is substituted by -OH and /or $C_1$-$C_4$alkoxy, m is the number 0 and n and p are the number 1.

4. A chlorine-containing thermoplastic according to claim 1, which contains at least one compound of the formula I in which X is $-NH_2$, R is -OH, $-NH_2$ or $-C_2H_4OH$, m is the number 0 and n and p are the number 1.

5. A chlorine-containing thermoplastic according to claim 1, which contains the compound anthranilic acid ethanolamide.

6. A chlorine-containing thermoplastic according to claim 1, which contains at least one compound of the formula I in an amount of 0.01 to 10% by weight, based on the chlorine-containing thermoplastic.

7. A chlorine-containing thermoplastic according to claim 1, which is an emulsion PVC.

8. A chlorine-containing thermoplastic according to claim 1, which contains a urea compound.

9. A chlorine-containing thermoplastic according to claim 1, which contains dicyandiamide.

10. A chlorine-containing thermosplastic according to claim 9, wherein the dicyandiamide has a particle size of less than 10 μm.

11. A chlorine-containing thermoplastic according to claim 8, which contains a stabilizer mixture of 30 parts by weight of anthranilic acid ethanolamide and 70 parts by weight of dicyandiamide.

12. A chlorine-containing thermoplastic according to claim 9, which contains a stabilizer mixture of 70 parts by weight of anthranilic acid ethanolamide and 30 parts by weight of dicyandiamide.

13. A process for the preparation of a compound of the formula IV

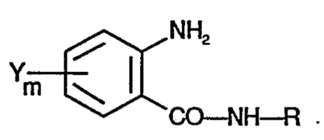

(IV)

in which R, Y and m are as defined above in claim 1, by reacting a suitably substituted isatoic anhydride with a primary amine $R-NH_2$, which comprises using butyl acetate or a butyl acetate/water mixture or the reaction product as the reaction medium.

14. A process according to claim 13, wherein R is $-CH_2-CH_2-OH$.

**Revendications**

1. Matières thermoplastiques chlorées contenant au moins un composé organique azoté répondant à la formule I:

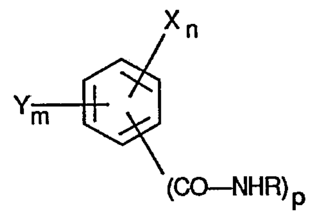

(I),

dans laquelle:
m désigne un nombre égal à 0, à 1 ou à 2,
n désigne un nombre égal à 1, à 2 ou à 3,
p désigne un nombre égal à 1 ou à 2,
Y représente -F, -Cl, -Br, -I, $-CH_3$ ou $-C_2H_5$,
X représente $-NH_2$, $-NHCH_3$, $-NHNH_2$, $-OCH_3$ ou $-OC_2H_5$,
et, lorsqu'il y en a plusieurs, les X peuvent représenter des radicaux différents pris parmi ceux qui viennent d'être mentionnés, et

R représente -H, -OH, $-NH_2$ ou un alkyle en $C_1$-$C_{18}$ porteur d'un à trois radicaux -OH et/ou alcoxy en $C_1$-$C_4$, ou encore R représente un radical répondant à la formule II:

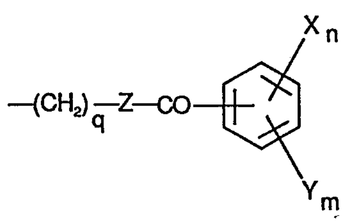

(II)

dans laquelle Z représente -NH- ou -O-, q représente un nombre entier de 0 à 6 et Y, X, m et n ont les significations indiquées ci-dessus, le symbole R ne pouvant représenter l'hydrogène que dans le cas où p est égal à 1.

2. Matières thermoplastiques chlorées selon la revendication 1 caractérisées en ce que, dans le composé de formule I, n et p sont égaux chacun à 1, et m est égal à 0.

3. Matières thermoplastiques chlorées selon la revendication 1 qui contiennent au moins un composé de formule I dans lequel X représente $-NH_2$, R représente -OH, $-NH_2$, ou un alkyle en $C_2$ ou $C_3$ porteur d'un radical -OH et/ou d'un alcoxy en $C_1$-$C_4$, m est égal à 0, et n et p sont égaux chacun à 1.

4. Matières thermoplastiques chlorées selon la revendication 1 qui contiennent au moins un composé de formule I dans lequel X représente $-NH_2$, R représente -OH, $-NH_2$ ou $-C_2H_4OH$, m est égal à 0, et n et p sont égaux chacun à 1.

5. Matières thermoplastiques chlorées selon la revendication 1 qui contiennent de l'éthanolamide de l'acide anthranilique.

6. Matières thermoplastiques chlorées selon la revendication 1 qui contiennent au moins un

composé de formule I en une quantité de 0,01 à 10% en poids par rapport aux matières thermoplastiques chlorées.

7. Matières thermoplastiques chlorées selon la revendication 1 caractérisées en ce qu'elles sont constituées de PCV émulsion.

8. Matières thermoplastiques chlorées selon la revendication 1 qui contiennent un dérivé de l'urée.

9. Matières thermoplastiques chlorées selon la revendication 1 qui contiennent de la cyanoguanidine.

10. Matières thermoplastiques chlorées selon la revendication 9 dans lesquelles la cyanoguanidine a une granularité inférieure à 10 µm.

11. Matières thermoplastiques chlorées selon la revendication 9 qui contiennent un mélange stabilisant constitué de 30 parties en poids d'éthanolamide de l'acide anthranilique et de 70 parties en poids de cyanoguanidine.

12. Matières thermoplastiques chlorées selon la revendication 9 qui contiennent un mélange stabilisant constitué de 70 parties d'éthanolamide de l'acide anthranilique et de 30 parties de cyanoguanidine.

13. Procédé pour préparer des composés répondant à la formule IV:

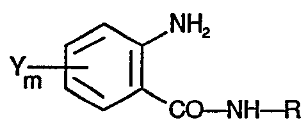

(IV)

dans laquelle, R, Y et m ont les significations qui leur ont été données à la revendication 1, par réaction, avec une amine primaire $R-NH_2$, d'un anhydride isatoïque convenablement substitué, procédé caracatérisé en ce qu'on utilise comme milieu réactionnel l'acétate de butyle ou un mélange d'acétate de butyle et d'eau ou le produit réactionnel.

14. Procédé selon la revendication 13 dans lequel R représente un radical $-CH_2-CH_2-OH$.